# EUROPEAN PATENT SPECIFICATION

(11) **EP 2 743 357 B1**
(45) Date of publication and mention of the grant of the patent: **15.03.2017**
(21) Application number: 11870736.3
(22) Date of filing: 06.12.2011
(51) Int. Cl.: C21B 5/00, C21B 5/02, C21B 5/04

(54) **BLAST-FURNACE SMELTING METHOD**
SCHMELZVERFAHREN FÜR EINEN HOCHOFEN
PROCÉDÉ DE FUSION DANS DES HAUTS FOURNEAUX

(30) Priority: 10.08.2011 RU 2011133771
(43) Date of publication of application: 18.06.2014
(73) Proprietor: Obschestvo s Ogranichennoi Otvetstvennostyu "Promyshlennyye Innovatsionnyye Tekhnologii Natsionalnoi Koksokhimicheskoi Assotsiatsii", Ekaterinburg 620014 (RU)
(72) Inventor: KOBELEV, Vladimir Andreevich, Ekaterinburg 620072 (RU); CHERNAVIN, Alexander Yurevich, Ekaterinburg 620142 (RU); CHERNAVIN, Daniil Alexandrovich, Ekaterinburg 620142 (RU); NECHKIN, Georgii Alexandrovich, Lesnoy Sverdlovskaya obl. 624205 (RU); STUKOV, Mikhail Ivanovich, Ekaterinburg 620049 (RU); ZAGAINOV, Vladimir Semenovich, Ekaterinburg 620149 (RU); KOSOGOROV, Sergey Alexandrovich, Lesnoy Sverdlovskaya obl. 624205 (RU); ZORIN, Maxim Viktorovich, Ekaterinburg 620149 (RU); POSOKHOV, Yury Mikhailovich, Ekaterinburg 620144 (RU); ANDREYKOV, Eugenii Josifovich, Ekaterinburg 620075 (RU); VALYAVIN, Gennady Georgievich, Ufa 450005 (RU); ZAPORIN, Viktor Pavlovich, Ufa 450068 (RU); SUKHOV, Sergey Vitalevich, Ufa 450005 (RU); BIDILO, Igor Viktorovich, Petropavlovsk 150000 (KZ); MAMAEV, Mikhail Vladimirovich, Perm 614030 (RU)
(74) Representative: Kesselman, Ljubov
(86) International application number: PCT/RU2011/000960
(87) International publication number: WO 2013/022372

(56) References cited:
- WO-A1-81/02584
- JP-A- 56 065 907
- RU-C1- 2 178 000
- RU-C1- 2 186 854
- RU-C1- 2 186 854
- SU-A1- 596 624
- US-A- 3 966 456
- US-A- 4 963 185

## Description

### Technical field

Invention relates to metallurgy, in particular to smelting of pig iron (cast iron) in blast furnace.

### Background of art

Sulphur is a harmful impurity in pig iron (as well as in steel). Raw sources of sulphur in pig iron smelted in blast furnace are iron ore raw material and coke. Main part of sulphur is being introduced into a blast furnace with coke, less with sinter or ore in the form of ferrous sulphide (iron(II) sulphide), pyrite, sulphates, etc. 10-20% of sulphur in blast furnace is removed in the form of gaseous compounds, the rest part of sulphur is transferred into pig iron and slag in the form of sulphides FeS, CaS, etc. Iron sulphide FeS is well dissolved in pig iron. During blast furnace smelting the main desulphurization process, i.e. removal of sulphur from metal is the formation of calcium sulphide CaS, which is insoluble in pig iron and remains in slag. For this purpose along with iron ore raw material main components, including CaO in the form of lime, are always charged. However, while the modulus of basicity of slag in CaO/SiO₂ increases then the distribution coefficient of sulphur between pig iron and slag is extreme in character growing up to a definite value and then decreasing due to increase of viscosity and smelting temperature of the main slag. Maximum distribution coefficient of sulphur between slag and pig iron is about 40 units (un.). [Dolinsky et al " 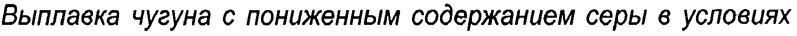 *3CM*" - Smelting of pig iron with lower sulphur content at ZSMK].

Known is method of blast furnace smelting on the basis of magnesia-aluminous slags with content of Al₂O₃ and MgO from 5 to 20% each (patent of invention RU 2350658), including loading to the furnace of iron ore burden (charge), which contains aluminous and magnesia additives, blowing of high-temperature fuel-enriched blast, obtaining of pig iron and final slag, wherein iron ore burden with aluminous and magnesia additives is formed with siliceous (silicon) modulus (mass ratio) SiO₂/Al₂O₃ in the range of 2.2-2.5 and with magnesia index MgO/(CaO+MgO) in the range of 0.30-0.35, providing recovery of low-sulphur pig iron and final slag with basicity of CaO/SiO₂ in the range of 0.78-0.92. This method is taken as prototype.

Disadvantage of the method according to the prototype lies in low effectiveness of reduction of sulphur content to 0.02% in pig iron and high fuel consumption.

US3966456 and US4963185 also disclose methods to use high sulfur cokes in steel making processes.

### Summary of the invention

Technical result achieved by the present invention is an effective decrease of sulphur content in pig iron, reduction of fuel consumption.

The desired technical result is achieved by a method of blast furnace smelting of pig iron, including loading of solid fuel, iron ore materials and fluxes into blast furnace, wherein according to the invention as a solid fuel used is coke, obtained as a result of coking of charge, containing product produced by retarded coking at a temperature up to 500°C of a mixture of heavy sulphurous (sulphur) residues from petroleum processing and a reagent - an alkaline earth metal oxide or an alkaline earth metal hydroxide, whereas the quantity of reagent in the mixture is from 0.1 to 2% for each percent of sulphur content in heavy sulphur residues from petroleum processing, quantity of CaO-based fluxes supplied into a blast furnace is determined on the basis of ensuring a modulus of basicity of the slags equal to 0.29-0.77. and in the region of 29-59 kg/t of pig iron, as set forth in claim 1

Before mixing of heavy sulphur residue from petroleum processing and reagent, said heavy sulphur residue from petroleum processing (oil refining) are previously melted and said reagent is dispersed.

Along with iron ore raw material schungite or flux on the basis of calcium ferrites nFe₂O₃·CaO in the amount of 30-50 kg/t (kg per 1 ton) of pig iron is added into a blast furnace for regulation of silicon content in pig iron.

Along with iron ore raw material manganese silicium iron ore MnO·FeO·SiO in the amount of 10-80 kg/t of pig iron or fayalite 2FeO·SiO₂ in the amount of 10-50 kg/t of pig iron is added into a blast furnace for regulation of manganese content in pig iron.

Along with iron ore raw material calcium vanadates CaO·V₂O₃ in the amount of 5-40 kg/t of pig iron or fayalite 2FeO·SiO₂ in the amount of 10-50 kg/t of pig iron are added to a blast furnace for control of vanadium content in pig iron.

Along with iron ore raw material calcium ferrite nFe₂O₃·CaO in the amount of 20-50 kg/t of pig iron is added into a blast furnace for assimilation of coke ash in the slag.

In the present method the used coke is obtained from carbon-containing charge, comprising at least one component (product), which is produced by retarded (slow) coking of heavy sulphur residue from petroleum processing. Thus a charge for coking may contain this component either solely or as combination of this component with components of coal blend. It means that the amount of the product, which is produced by process of slow coking in charge, from which coke is produced, may constitute from 1% to 100%. The main point is the presence in charge for coking of component produced by process of slow coking of heavy sulphur residues from petroleum processing. In the Claims this component is indicated as a product, produced by means of retarded coking at a temperature up to 500°C of a mixture of heavy sulphur residues from petroleum processing and a reagent that is an alkaline earth metal oxide, wherein the quantity of reagent in the mixture is from 0.1 to 2% for each percent of suphur content in heavy sulphur residues from petroleum processing.

Before the process of slow coking of heavy residues of petroleum processing, the reagent is added in the form of an alkaline earth metal oxide or an alkaline earth metal hydroxide.

For uniform distribution of fine-dispersed reagent across the volume of heavy residues from petroleum processing, the reagent itself is being dispersed (after which it becomes fine-dispersed) and heavy residues of petroleum processing before adding of the reagent thereto are heated (thereby providing softening, melting of residues).

Uniform distribution of reagent across the volume of heavy residue of petroleum processing subsequently provides the higher ability of coke to bond sulphur in metal.

After treatment of heavy residues of petroleum processing with the reagent those residues are subjected to retarded coking (semicoking) at a temperature of up to 500°C.

Then coked residues of petroleum processing are being coked independently or together with coal charge and thereby providing the coke ready for application as a solid fuel in blast furnace for pig iron smelting.

Use of coke obtained by the above process allows not only to prevent introduction of sulphur from fuel into pig iron but provides decreasing of sulphur content in pig iron.

Decrease of sulphur content in pig iron is ensured by the fact that desulphurization of pig iron goes on by means of reaction of ferrous sulphide, dissolved in pig iron, with lime of CaO or MnO during passing of pig iron drops through coke layer. Thus formed calcium sulphide CaS or manganese sulphide MnS is insoluble in pig iron and available in a slag. According to present invention, the fine-dispersed reagent is present in coke volume, produced by coking of charge, containing component obtained in its turn by coking of heavy residues of petroleum processing. Such coke has a higher ability to react with sulphur in metal (pig iron) and provides deep desulphurization during passing of liquid metal (pig iron) through coke layer. At the same time the inventors observed the obtaining of stable compound of CaS during heating of coke up to temperatures 1150-1200°C. Stability of compound CaS guarantees transfer thereof from coke into slag component of blast furnace smelting products and thus guarantees low mass fraction of sulphur in pig iron. Similar reactions take place in the case of use as a reagent both as an alkaline earth metal oxide as well as an alkaline earth metal hydroxide.

Thus, sulphur from metal (pig iron) is removed at interaction of liquid metal with coke, across the volume of which the reagent is distributed. Thereby requirement of sulphur removal during passing of liquid metal through layer of slag is excluded, since the metal enters to the layer of slag being already desulphurized.

At present (prior to implementation of the present invention) the removal of sulfur from the metal was carried out by adding a fluxing additions to the blast furnace along with iron ore components. In this case removal of sulphur from metal was provided by passing of liquid metal through layer of slag. Presence of the reagent in coke allowed to decrease quantity of fluxes supplied to blast furnace together with iron ore raw material, since main removal of sulphur occurs at a time of passing of liquid metal not through the layer of slag, but through higher located layer of coke. In the method according to the invention distribution coefficient of sulphur between slag and pig iron was increased to 180 units (un.), while distribution coefficient of sulphur between slag and pig iron at conventional blast furnace smelting (when fluxes supplied together with iron ore raw material) amounts 16.67 un. Mass fraction of sulphur bound to slag related to its total entered amount in smelting has been increased from 0.769 un. to 0.973 un., i.e. by 26.5% relevant. Quantity of sulphur bound to slag has been increased from 1.0 g/kg of pig iron to 2.16 g/kg of pig iron.

Quantity of introduced fluxes formerly (in known methods) was defined by maintaining of a modulus of basicity of blast furnace slags within the range of CaO/SiO₂ = (0.8 - 1.2); besides it was necessary to keep heating of slag to temperatures of 1450 - 1600°C (to maintain molten state of the slags).

In the method, according to the invention, the modulus of basicity has been decreased to CaO/SiO₂ = 0.29 - 0.77 by means of decreasing of quantity of fluxing additions supplied to a furnace along with iron ore raw material, which allows to reduce the temperature necessary for heating of slags to 1300-1440°C.

Reducing the necessary heating temperature of slags means that the consumption of fuel used in the method according to the invention in comparison to existing blast furnace smelting methods is reduced.

Thus, the claimed method of blast furnace smelting allows maximum removal of sulphur from metal (pig iron) by providing highly effective interaction of reagent distributed across the whole coke volume with sulphur containing in metal while passing of metal through a layer of coke. Necessity in big quantity of fluxing additions supplied to the furnace along with iron ore raw material has been decreased, since removal of sulphur is provided not by passing of metal through layer of slag (as in formerly known methods) but removal of sulphur from metal occurs earlier, i.e. during the passing of metal through a layer of coke located higher than the slag layer. Decrease in quantity of fluxing additions supplied to the furnace allowed to decrease a modulus of basicity of slags resulting, in its turn, in possibility of decreasing of the necessary temperature of heating of slags (for ensuring of molten state of the slags). Decrease of the necessary temperature of heating of slags means that consumption of fuel used in blast furnace smelting method according to the invention is reduced.

At implementation of the blast furnace smelting according to the method of invention, formation of «acid» and «cold» slags are provided, i.e. provided is smelting of «cold» pig iron.

Coke saving amounts up to 150 kg per ton of melted pig iron.

Mass fraction of silicon, manganese and/or vanadium in «cold» pig irons is regulated by introduction of appropriate oxide additions into smelted burden (charge).

Mass fraction of silicon in pig iron with lower physical heating (t = 1200-1300°C) is increased by introduction into the smelted charge of carbo-siliceous shale, i.e. schungite, which have in its structure silicon carbide easily dissolving in pig iron and increasing mass fraction of silicon in the latter. For necessary decrease of mass fraction of silicon in pig iron relative to equilibrium for lowered to 1200-1350°C temperatures ([SiO] ∼ 0.2-0.3%) the flux on the basis of calcium ferrites (nFe₂O₃·CaO) in quantity of 30-50 kg/t of pig iron is introduced into charge composition instead of schungite.

Mass fraction of manganese in pig iron with lowered physical heating (t = 1200-1300°C) is increased by introduction of manganese ferrous siliceous ore (ferro-silicon manganese ore) in quantity of 10-80 kg/t of pig iron into charge being smelted. Manganese ferrous siliceous ore in low-basicity intermediate and final blast furnace slags is badly assimilated, retained on coke packing providing high level of reduction and transfer of manganese into pig iron. When lower mass fraction of manganese is required in pig iron relative to equilibrium for lowered up to 1200-1350°C temperatures ([Mn] ∼ 0.2-0.3%) then the fayalite in quantities of 10-50 kg/t of pig iron is introduced into burden being smelted instead of ferro-silicon manganese ore Fayalite? (2FeO·SiO₂) due to low melting point and low reductibility provides oxidation and removal of manganese from pig iron beginning from levels of primary drop formation up to hearth and chute at discharge of smelting products.

Mass fraction of vanadium in pig iron with lowered physical heating (t=1200-1350°C) is increased by introduction into burden being smelted of calcium vanadates (CaO·V₂O₃) in quantity of 5-40 kg/t of pig iron. Calcium oxide is actively absorbed by low-basicity intermediate and final slag by this invoking reduction and transfer of vanadium into pig iron. When lower mass fraction of vanadium is required in pig iron relative to equilibrium for lowered up to 1200-1350°C temperatures ([V] ∼ 0.05-0.07%) then the fayalite in quantities of 10-50 kg/t of pig iron is introduced into smelted burden instead of calcium vanadate. Fayalite (2FeO·SiO₂), due to low melting point and low reducibility, provides oxidation and removal of vanadium from pig iron beginning from levels of primary drop formation (steaming of blast furnace) up to hearth and chute at discharge of smelting products.

Melting of the iron ore part of burden with lowered entry (up to 29-59 kg/t of pig iron) of CaO predetermines the formation of lowered up to 0.29-0.77 un. CaO/SiO₂ of modulus of basicity of final as well as intermediate slag. Intermediate slags with low modulus of basicity is characterized by weak assimilation ability in relation to coke ash by 50% consisting of SiO₂ and by 25% consisting of Al₂O₃. Coke ash assimilation process is activated by calcium ferrite (nFe₂O₃·CaO) in quantity of 20-50 kg/t of pig iron from composition of fluxing additions in stoichiometric equality with Al₂O₃+SiO₂. Meanwhile CaO forms with SiO₂ and Al₂O₃ easily fusible compounds in proportions closer to 1.0 in molar estimate. The latter are actively assimilated by slag with low modulus of basicity.

Quantity of reagent introduced into coke composition may amount from 0.1 to 2% for each percent of sulphur content in heavy residue of petroleum processing.

In Table 1 is presented chemical composition of top-and-bottom smelting products at typical coke (metallurgical) and modified coke. Smelting was implemented in a laboratory furnace with the recovery of 1 kg of pig iron.

**Table 1**

| **Type of coke** | **Content in coke, %** | | **Content in pig iron, %** | | | **Content in slag, %** | | | **Slag** | | |
|---|---|---|---|---|---|---|---|---|---|---|---|
| | **S** | **CaO** | **C** | **Si** | **S** | **S** | **CaO** | **SiO₂** | **Quality, g** | **S, g** | **∑S, g** |
| Metallurgical (typical) | 0,52 | 0,85 | 4,5 | 0,60 | **0,030** | 0,50 | 40,0 | 35,0 | 200 | 1,0 | 1,3 |
| Modified | 0,86 | 1,86 | 4,5 | 0,60 | **0,006** | 1,08 | 40,5 | 35,0 | 200 | 2,16 | 2,22 |

It is evident from the Table 1, that sulphur content in pig iron is five times lower when modified coke (with reagent content) is applied, than in the case of use of typical metallurgical coke (blast furnace).

It should be as well mentioned that natural CaO contains also in typical metallurgical blast furnace coke in the amount of 0.85%.

Ratio CaO/S in typical metallurgical and modified coke is 1.64 and 2.16, respectively. This means that the above ratio is by 24% higher in modified coke than in typical metallurgical coke. Besides, sulphur content is five times lower in pig iron, smelted with the use of modified coke than in that, smelted with the use of conventional metallurgical coke. This means, that natural reagent (CaO) is not of crucial importance in desulphurization. Reduction of sulphur content in pig iron is achieved particularly by means of modified state of CaO in coke.

Minimum value of reagent content per percent of sulphur content (equal to 0.1%) in heavy oil (petroleum) residue is defined on the basis of condition of completeness of binding of sulphur in heavy petroleum residue to form CaS.

Maximum value of reagent content for one percent of sulphur content (2.0 %) in heavy oil residue is defined on the basis of condition of minimization of debilitating (weakening) effect of CaO to coke structure.

In the present method coefficient of distribution of sulphur between slag and pig iron amounts 180 un., allowing to decrease quantity of CaO, supplied to a furnace along with iron ore raw material (agglomerate) and fluxing additions from 228.3 kg/t of pig iron to 29-59 kg/t of pig iron. Meanwhile quantity of CaO, supplied to a furnace together with iron ore raw material is selected to provide minimal temperature for smelting of slag, corresponding to modulus of basicity of slag CaO/SiO₂ of final blast furnace slags within 0.29 - 0.77 (see Table 2).

### Preferable example of embodiment of invention and industrial applicability

Table 2 shows the results of smelting process simulated in Tamman laboratory furnace with measuring smelting temperature of pig iron as well as temperature of release of slag and pig iron.

Investigations have been made on the basis of three mostly widespread iron ore burdens (charges). Minimal smelting temperatures for each of the iron ore burdens are individual and predetermined by natural mineralogy in combination with quantity of CaO introduced to fluxing.

Low smelting temperatures of iron ore components allows to decrease heating temperature of slag in hearth from 1450-1600°C to 1300-1440°C, resulting in the decrease of heating temperature of pig iron from 1350-1500°C to 1200-1350°C. Meanwhile value of overheating of slag in hearth compared with the smelting temperature is not varied and have the previous value of 100-150°C.

Decrease of temperature of pig iron and slag predetermines the decrease of heat requirement of blast furnace smelting and, as a result, saving of coke about 218.7 kg/t of pig iron at smelting of agglomerate No 1-7 (Table 2); about 148.7 kg/t of pig iron at smelting of pellets of Kostomushsky GOK No 8-14 (Table 2); about 159.2 kg/t of pig iron at smelting of pellets of Mikhaylovsky GOK No 15-21 (Table 2).

Melting of iron ore charge with lowered introduction of CaO by 29-59 kg/t of pig iron predetermines the formation of lowered to 0.29-0.77 un. modulus of basicity of final slag as well as intermediate slag.

Intermediate slags with the decreased modulus of basicity are characterized by weak assimilation ability relative to coke ash by 50% consisting of SiO₂ and by 25% consisting of Al₂O₃. Process of assimilation of coke ash is activated by calcium ferrite nFe₂O₃·CaO from composition of fluxing additions. Thus, calcium ferrite forms easily fusible compounds with SiO₂ and Al₂O₃ in ratio close to 1.0 in molar estimate. The latter are actively assimilated by slag having low modulus of basicity.

Table 2 shows that by using of modified coke (coke in volume of which reagent is distributed) consumption of fuel for smelting of pig iron is significantly decreased.

**Table 2**

| Relationship indices of smelting temperatures (smelt. t °C), basicity factor with quantity of CaO for fluxing of iron ore components with fuel (coke) consumption for smelting of 1 ton of pig iron | | | | | | | | | | | | |
|---|---|---|---|---|---|---|---|---|---|---|---|---|
| **No** | **Type of iron ore components & coke** | **Specific quantity, kg/t of pig iron** | | | **In units (un.)** | **Smelt. t °C** | **Temperature of tapping, °C** | | **Heat content of melt** | | | **Specific coke consumption kg/t of pig iron** |
| | | **QTY** | **SiO₂** | **CaO** | **CaO/ SiO₂** | | **Slag** | **Pig iron** | **Slag, MJ/t pig iron** | **Pig iron, MJ/t pig iron** | **Total, MJ/t pig iron** | |
| **1** | **2** | **3** | **4** | **5** | **6** | **7** | **8** | **9** | **10** | **11** | **12** | **13** |
| 1 | Agglomerate with metallurgical coke | 1827 | 171,7 | 222,9 | 1,298 | 1453 | 1553 | 1453 | 767,5 | 1307,7 | 2075,2 | 500 |
| 2 | Agglomerate metallurgical coke | 1673 | 171,7 | 69,0 | 0,402 | 1350 | 1450 | 1350 | 435 | 1080,0 | 1515 | 365 |
| 3 | Agglomerate with metallurgical coke | 1623 | 171.7 | 19,0 | 0,111 | 1400 | 1550 | 1450 | 350 | 1305,0 | 1655 | 398,8 |
| 4 | Agglomerate with modified coke | 1633 | 171,7 | 29,0 | 0,169 | 1350 | 1450 | 1350 | 359,6 | 1080,0 | 1439,6 | 346,9 |
| 5 | Agglomerate with modified coke | 1643 | 171,7 | 39,0 | 0,227 | 1300 | 1375 | 1300 | 353,9 | 910,0 | 1263,9 | 304,6 |
| 6 | Agglomerate with modified coke | 1653 | 171,7 | 49,0 | 0,285 | 1250 | 1325 | 1280 | 335,2 | 832,0 | 1167,2 | 281,3 |
| 7 | Agglomerate with modified coke | 1663 | 171,7 | 59,0 | 0,344 | 1320 | 1375 | 1300 | 386,1 | 910,0 | 1296,1 | 312,3 |
| 8 | Pellets of Kostomuksh. with metallurgical coke | 1456 | 79,2 | 87,2 | 1,10 | 1390 | 1500 | 1400 | 562,5 | 1260,0 | 1822,5 | 420 |
| 9 | Pellets of Kostomuksh. with metallurgical coke | 1456 | 79,2 | 69,0 | 0,871 | 1270 | 1430 | 1330 | 527,7 | 997,5 | 1525,2 | 351,4 |
| 10 | Pellets of Kostomuksh. metallurgical coke | 1456 | 79,2 | 19,0 | 0,240 | 1300 | 1500 | 1400 | 562,5 | 1260,0 | 1822,5 | 420,0 |
| 11 | Pellets of Kostomuksh. with modified coke | 1456 | 79,2 | 29,0 | 0,366 | 1290 | 1350 | 1285 | 465,8 | 835,3 | 1301,1 | 299,8 |
| 12 | Pellets of Kostomuksh. with modified coke | 1456 | 79,2 | 39,0 | 0,492 | 1280 | 1295 | 1250 | 427,4 | 750,0 | 1177,4 | 271,3 |
| 13 | Pellets of Kostomuksh. with modified coke | 1456 | 79,2 | 49,0 | 0,619 | 1270 | 1325 | 1275 | 445,2 | 828,7 | 1273,9 | 293,5 |
| 14 | Pellets of Kostomuksh. with modified coke | 1456 | 79,2 | 59,0 | 0,745 | 1250 | 1365 | 1290 | 479,1 | 903,0 | 1382,1 | 318,5 |
| 15 | Pellets of Mikhayl. with metallurgical coke | 1491 | 96,7 | 106,4 | 1,10 | 1370 | 1500 | 1400 | 656,0 | 1260,0 | 1916,0 | 450 |
| 16 | Pellets of Mikhayl. with coke | 1491 | 96,7 | 69,0 | 0,714 | 1350 | 1450 | 1350 | 629,3 | 1080,0 | 1709,3 | 401,2 |
| 17 | Pellets of Mikhayl. with metallurgical coke | 1491 | 96,7 | 19,0 | 0,196 | 1290 | 1430 | 1340 | 615,6 | 1072,0 | 1687,6 | 396,1 |
| 18 | Pellets of Mikhayl. with modified coke | 1491 | 96,7 | 29,0 | 0,30 | 1230 | 1305 | 1250 | 502,4 | 750,0 | 1252,4 | 294,0 |
| 19 | Pellets of Mikhayl. with modified coke | 1491 | 96,7 | 39,0 | 0,403 | 1210 | 1285 | 1240 | 494,7 | 744,0 | 1238,7 | 290,8 |
| 20 | Pellets of Mikhayl. with modified coke | 1491 | 96,7 | 49,0 | 0,507 | 1230 | 1305 | 1250 | 502,4 | 750,0 | 1252,4 | 294,0 |
| 21 | Pellets of Mikhayl. with modified coke | 1491 | 96.7 | 59,0 | 0,610 | 1270 | 1370 | 1280 | 565,8 | 896,0 | 1461,8 | 343,1 |

## Claims

1. A method for smelting pig-iron in a blast furnace, comprising loading solid fuel, iron ore materials and fluxes into a blast furnace, wherein as a solid fuel used is coke which is produced by coking of carbon-containing charge, comprising a product produced by retarded coking at a temperature of up to 500 °C of a mixture of heavy sulphur residues from petroleum processing and a reagent that is an alkaline earth metal oxide or hydroxide, wherein prior to mixing said heavy sulphur residues are melted and said reagent is dispersed therein, and whereas the quantity of reagent in the mixture is from 0.1 to 2.0% per percent of sulphur content in heavy sulphur residues from petroleum processing, the quantity of CaO-based fluxes supplied into a blast furnace is in a region of 29-59 kg/t of pig iron to ensure a modulus of basicity of the slags equal to 0.29-0.77.

2. The method according to claim 1 **characterized in that** along with iron ore raw material, schungite or flux on the basis of calcium ferrites nFe₂O₃·CaO in quantity of 30-50 kg/t of pig iron is added into a blast furnace for regulation of silicon content in pig iron.

3. The method according to claim 1 **characterized in that** along with iron ore material, manganese ferrous siliceous ore MnO·FeO·SiO in quantity of 10-80 kg/t of pig iron or fayalite 2FeO·SiO₂ in quantity of 10-50 kg/t of pig iron is added into a blast furnace for regulation of manganese content in pig iron.

4. The method according to claim 1 **characterized in that** along with iron ore material, calcium vanadates CaO·V₂O₃ in quantity of 5-40 kg/t of pig iron or fayalite 2FeO·SiO₂ in quantity of 10-50 kg/t of pig iron is added into a blast furnace for regulation of vanadium content in pig iron.

5. The method according to claim 1 **characterized in that** along with iron ore material, calcium ferrite nFe₂O₃.CaO in quantity of 20-50 kg/t of pig iron is added into a blast furnace for assimilation of coke ash in the slag.

## Patentansprüche

1. Verfahren zum Erschmelzen von Roheisen in einem Hochofen, das die Beschickung des Hochofens mit einem festen Brennstoff, Eisenerzstoffen und Zuschlägen umfasst, wobei als fester Brennstoff Koks verwendet wird, der durch Verkoken eines kohlenstoffhaltigen Beschickungsguts erzeugt wird, umfassend ein Produkt, erzeugt durch verzögertes Verkoken eines Gemischs aus schweren Schwefelrückständen aus der Erdölverarbeitung und einem Reagens, das ein Erdalkalioxid oder -hydroxid darstellt, bei einer Temperatur von bis zu 500°C, wobei vor dem Mischen die schweren Schwefelrückstände geschmolzen werden und das Reagens darin verteilt wird, wobei die Menge an Reagens im Gemisch 0,1 bis 2,0%, bezogen auf den Prozentanteil an Schwefelgehalt in den schweren Schwefelrückständen aus der Erdölverarbeitung beträgt, die Menge an dem Hochofen zugeführten Zuschlägen auf CaO-Basis in einem Bereich von 29-59 kg/t Roheisen liegt, um einen Basizitätsmodul der Schlacken von 0,29-0,77 zu gewährleisten.

2. Verfahren nach Anspruch 1, **dadurch gekennzeichnet, dass** neben dem Eisenerzrohstoff Schungit oder ein Zuschlag auf der Basis von Calciumferriten nFe₂O₃·CaO in einer Menge von 30-50 kg/t Roheisen dem Hochofen zur Steuerung des Silicium-Gehalts im Roheisen zugeführt wird.

3. Verfahren nach Anspruch 1, **dadurch gekennzeichnet, dass** neben dem Eisenerzrohstoff dem Hochofen zur Steuerung des Mangan-Gehalts im Roheisen Manganeisensilicium-erz MnO · FeO· SiO in einer Menge von 10-80 kg/t Roheisen oder Fayalit 2FeO· SiO₂ in einer Menge von 10-50 kg/t Roheisen zugeführt wird.

4. Verfahren nach Anspruch 1, **dadurch gekennzeichnet, dass** neben dem Eisenerzrohstoff dem Hochofen zur Steuerung des Vanadiumgehalts im Roheisen Calciumvanadate CaO· V₂O₃ in einer Menge von 5-40 kg/t Roheisen oder Fayalit 2FeO · SiO₂ in einer Menge von 10-50 kg/t Roheisen zugeführt wird.

5. Verfahren nach Anspruch 1, **dadurch gekennzeichnet, dass** neben dem Eisenerzrohstoff dem Hochofen zur Aufnahme der Koksasche in der Schlacke Calciumferrit nFe₂O₃ · CaO in einer Menge von 20-50 kg/t Roheisen zugeführt werden.

## Revendications

1. Procédé pour la mise en fusion de fonte brute dans un haut-fourneau, comprenant le fait de charger du combustible solide, des matières à base de minerai de fer et des fondants dans un haut-fourneau, dans lequel, à titre de combustible solide, on utilise du coke que l'on obtient par cokéfaction d'une charge contenant du charbon, comprenant un produit que l'on obtient par cokéfaction retardée à une température s'élevant jusqu'à 500 °C d'un mélange de résidus lourds à base de soufre issus du traitement du pétrole et d'un réactif qui représente un hydroxyde ou un oxyde de métal alcalino-terreux, dans lequel, avant le mélange, lesdits résidus lourds à base de soufre sont portés à fusion et ledit réactif y est dispersé, et tandis que la quantité du réactif dans le mélange s'élève de 0,1 à 2,0 % de la teneur en soufre des résidus lourds à base de soufre issus du traitement du pétrole, la quantité des fondants à base de CaO alimentés dans un haut-fourneau se situe dans la plage de 29 à 59 kg/t de fonte brute pour garantir un module de basicité des scories égal à 0,29-0,77.

2. Procédé selon la revendication 1, **caractérisé en ce qu'**on ajoute, conjointement à la matière brute à base de minerai de fer, de la shungite ou un fondant à base de ferrites de calcium nFe₂O₃·CaO en une quanti-té de 30 à 50 kg/t de fonte brute dans un haut-fourneau à des fins de régulation de la teneur de la fonte brute en silicium.

3. Procédé selon la revendication 1, **caractérisé en ce qu'**on ajoute, conjointement à la matière à base de minerai de fer, du minerai ferreux siliceux de manganèse MnO · FeO· SiO en une quantité de 10 à 80 kg/t de fonte brute ou de la fayalite 2FeO · SiO₂ en une quantité de 10 à 50 kg/t de fonte brute dans un haut-fourneau à des fins de régulation de la teneur de la fonte brute en manganèse.

4. Procédé selon la revendication 1, **caractérisé en ce qu'**on ajoute, conjointement à la matière à base de minerai de fer, des vanadates de calcium CaO· V₂O₃ en une quantité de 5 à 40 kg/t de fonte brute ou de la fayalite 2FeO · SiO₂ en une quantité de 10 à 50 kg/t de fonte brute dans un haut-fourneau à des fins de régulation de la teneur de la fonte brute en vanadium.

5. Procédé selon la revendication 1, **caractérisé en ce qu'**on ajoute, conjointement à la matière à base de minerai de fer, de la ferrite de calcium nFe₂O₃ · CaO en une quantité de 20 à 50 kg/t de fonte brute dans un haut-fourneau à des fins d'assimilation des cendres de coke dans les scories.
